# FASCICULE DE BREVET EUROPEEN

(11) **EP 1 343 291 B1**
(45) Date de publication et mention de la délivrance du brevet: **30.03.2005**
(21) Numéro de dépôt: 03100141.5
(22) Date de dépôt: 23.01.2003
(51) Int. Cl.: H04L 29/06, H04L 29/08

(54) **Dispositif et procédé d'optimisation d'un trafic réseau**
Vorrichtung und Verfahren zur Optimierung des Netzwerkverkehrs
Apparatus and method for optimising network traffic

(30) Priorité: 05.03.2002 FR 0202806
(43) Date de publication de la demande: 10.09.2003
(73) Titulaire: Société Française du Radiotéléphone-SFR, 75008 Paris (FR)
(72) Inventeur: Vignaud, Frédéric, 38700 Le Sappey en Chartreuse (FR)
(74) Mandataire: Schmit, Christian Norbert Marie

(56) Documents cités:
- GB-A- 2 327 829
- US-A- 5 673 322
- ZENEL B: "A GENERAL PURPOSE PROXY FILTERING MECHANISM APPLIED TO THE MOBILE ENVIRONMENT" WIRELESS NETWORKS, ACM, US, vol. 5, no. 5, octobre 1999 (1999-10), pages 391-409, XP000902494 ISSN: 1022-0038
- BIESZCZAD A ET AL: "Network management application-oriented taxonomy of mobile code" NETWORK OPERATIONS AND MANAGEMENT SYMPOSIUM, 1998. NOMS 98., IEEE NEW ORLEANS, LA, USA 15-20 FEB. 1998, NEW YORK, NY, USA,IEEE, US, 15 février 1998 (1998-02-15), pages 659-669, XP010267394 ISBN: 0-7803-4351-4

## Description

L'invention a pour objet un procédé d'optimisation d'un trafic réseau et des dispositifs de mise en oeuvre associés. Le domaine de l'invention est celui des réseaux de télécommunications, et des services accessibles via ces réseaux. Plus particulièrement, le domaine de l'invention est celui de l'accès à des services, via des réseaux, en utilisant des clients mobiles. Un client mobile est un appareil intelligent capable de mettre en oeuvre un programme communicant pour accéder à un, ou plusieurs, réseaux de télécommunication et ainsi se connecter à un serveur correspondant à un service auquel est abonné l'utilisateur du client mobile.

Un but de l'invention est de réduire le flux d'informations reçu et émis par le client mobile pour accéder à différents services auxquels est abonné son utilisateur.

Un autre but de l'invention est de réduire l'activité radioélectrique d'un client mobile.

Un autre but de l'invention est de réduire la consommation en énergie d'un client mobile.

Dans l'état de la technique on connaît différentes méthodes pour essayer de résoudre ces problèmes. Une première méthode est connue sous l'appellation d'optimisation des protocoles de routage. Un protocole de routage, ou un protocole de manière générale, définit des formats pour des échanges d'informations entre deux appareils communiquant via un réseaux. Un protocole définit en particulier quelles sont les informations qui sont transmises via des trames ou des messages. L'optimisation d'un protocole, dans l'état de la technique, revient à réduire la taille des trames émises. Il s'agit en fait d'une rationalisation des informations transmises. On veille alors à ce que ne soient plus transmises d'informations redondantes ou inutiles dans le contexte dans lequel le message, ou la trame, est émis.

Une autre solution mise en oeuvre, est l'utilisation de mémoire cache. Une mémoire cache est une mémoire qui conserve la trace des opérations les plus récentes qui ont été effectuées par l'utilisateur de l'appareil où est installée la mémoire cache. Ainsi si l'utilisateur effectue deux fois la même requête, il n'est plus nécessaire d'aller chercher la réponse à cette requête sur le réseau, puisque cette réponse est déjà présente dans la mémoire cache. Une telle solution est inadaptée car la réponse à une requête peut dépendre de l'instant auquel la question est posée. Dans la mesure où les mémoires caches ne sont pas mises à jour, et ce dans le but de limiter le flux réseau, les réponses à des requêtes identiques ne sont pas toujours pertinentes. Cela est en particulier vrai dans des applications de messageries électroniques par exemple. En effet un client, ou application cliente, effectue régulièrement des interrogations pour savoir si de nouveaux messages sont arrivés. La requête est donc toujours identique mais la réponse n'est pas forcément toujours la même. Cette réponse ne peut donc pas être enregistrée dans une mémoire cache. Ces interrogations périodiques sont aussi connues sous le nom de «polling».

Une troisième solution consiste à réduire le flux en compressant les données transmises. Cependant cette technique a pour effet de maintenir une activité radioélectrique importante ainsi qu'une occupation du réseau. De plus cela provoque des calculs supplémentaires car il faut compresser et décompresser les données émises et reçues. Dans cette optique on gagne un peu en encombrement réseau, mais dans ce cas on perd en autonomie pour un client mobile car les opérations de compression et de décompression demandent beaucoup de temps de cycle au microprocesseur et donc consomment de l'énergie.

Dans l'état de la technique on connaît aussi le document GB 2 327 829 A qui divulgue un procédé de gestion des communications d'un dispositif mobile. Cet enseignement transforme ces communications sans les réduire.

Ainsi dans les quatre solutions existantes dans l'état de la technique, aucune ne réduit significativement l'activité réseau d'un client, surtout d'un client mobile, aucune ne résout un problème lié à une interrogation régulière d'un serveur et donc aucune ne résout le problème de consommation.

Le problème persistant est donc, dans de nombreux protocoles réseaux, que le client envoie périodiquement au serveur des requêtes afin d'être mis au courant d'une modification d'un contexte sur le serveur. Ce flux périodique de requêtes est coûteux en terme de bande passante et un objectif essentiel de l'invention est de réduire ce flux réseau.

Dans l'invention on résout ces problèmes en contrôlant le flux réseau généré par le client à destination d'un serveur de service à l'aide d'un programme serveur local, aussi connu sous le nom de «proxy», embarqué sur l'appareil client, le programme serveur local étant piloté par un serveur contrôleur réseau. Le programme serveur local est installé sur l'appareil client, ce programme serveur local intercepte alors l'ensemble du trafic émis/reçu par l'appareil client.

Ainsi d'une part, le programme serveur local sert à contrôler le trafic, ce contrôle pouvant consister en un mode relais dans lequel le programme serveur local transmet le message initié par le client vers un serveur sans effectuer aucun autre traitement. Le programme serveur local peut aussi fonctionner dans un mode bloquant dans lequel il bloque les messages initiés par le client vers le serveur. Dans le mode bloquant le programme serveur local répond alors au client que le serveur de service est inaccessible ou occupé. Enfin le programme serveur local peut fonctionner dans un mode d'initialisation dans lequel il intercepte les messages initiés par le client et les transmet à un serveur contrôleur réseau, sans les transmettre au serveur de service auquel était destiné initialement le message.

D'autre part le programme serveur local a une fonction de communication avec le serveur contrôleur réseau. Cette fonction permet d'échanger des messages avec le serveur contrôleur réseau, ce qui permet aussi au serveur contrôleur réseau de commander le mode de fonctionnement du programme serveur local.

Le serveur contrôleur de réseau est un appareil connecté au réseau et a principalement deux fonctions. Une première fonction est une fonction de communication avec un programme serveur local. Une deuxième fonction est une fonction d'interrogation d'un serveur de service, par exemple d'interrogation d'un serveur de messagerie.

Le principe de l'invention est ainsi le suivant. Dans un premier temps le programme serveur local est dans un mode d'initialisation. Dans ce mode il intercepte des premiers messages émis par le client. Ces messages sont initialement à destination d'un serveur de service. Ces messages sont alors retransmis, par le programme serveur local, au serveur contrôleur réseau. A la réception de ces messages, le serveur contrôleur réseau se paramètre pour pouvoir dialoguer avec le serveur de service à la place de l'application cliente. Les messages reçus par le serveur contrôleur lors de la phase d'initialisation comportent en particulier un identifiant ou «login», de l'utilisateur de l'appareil client, ainsi qu'un mot de passe correspondant au compte de cet utilisateur sur le serveur de service. De même les messages reçus comportent une indication sur la fréquence à laquelle il faut interroger le serveur de service. Le serveur contrôleur est donc en mesure de se paramétrer pour effectuer les tâches d'interrogation de l'application cliente.

Après la phase d'initialisation, le programme serveur local passe en mode bloquant. Le programme serveur local reste en mode bloquant jusqu'à ce qu'il reçoive un message du serveur contrôleur lui indiquant un changement de contexte sur le serveur de service. Dans ce cas, le programme de serveur local passe en mode relais et le client est en mesure d'interroger le serveur de service. Un contexte comporte, par exemple, le nombre de messages non lus, ou de nouveaux messages, dans une boîte à lettre électronique.

L'invention a donc pour objet un procédé d'optimisation d'un trafic réseau comportant un client mobile et un serveur de service caractérisé en ce que le procédé comporte les étapes suivantes :
- une application cliente, exécutée par le client mobile, émet une première requête destinée au serveur de service,
- un programme serveur local, exécuté par le client mobile, intercepte la première requête destinée au serveur de service,
- le programme serveur local produit un message d'initialisation à partir du contenu de la première requête, message d'initialisation comportant des informations permettant à un serveur contrôleur de se faire passer pour l'application cliente, de préférence un identifiant et un mot de passe, le message d'initialisation comportant aussi des informations sur un serveur de service à interroger, de préférence son adresse sur un réseau et son type,
- le programme serveur local émet le message d'initialisation à destination du serveur contrôleur,
- le serveur contrôleur reçoit le message d'initialisation et le serveur contrôleur se paramètre en fonction du contenu du message d'initialisation pour émettre des requêtes à destination du serveur de service.

L'invention a aussi pour objet un dispositif client, communiquant sur un réseau, caractérisé en ce que le dispositif client comporte une mémoire de programme comportant des codes instruction correspondant à une application cliente émettant des requêtes vers un serveur de service, la mémoire de programme comportant aussi des codes instruction correspondant à un programme serveur local pour intercepter et traiter des messages émis par l'application cliente et pour recevoir et traiter des messages émis par un serveur contrôleur.

L'invention a encore pour objet un dispositif serveur contrôleur, communiquant sur un réseau, caractérisé en ce que le dispositif serveur contrôleur comporte une mémoire de configuration pour enregistrer des informations d'un message d'initialisation, le dispositif serveur contrôleur comporte aussi une mémoire de programme comportant des codes instruction pour émettre des requêtes vers le serveur de service en fonction du contenu de la mémoire de configuration, la mémoire de programme comportant aussi des codes instruction pour émettre un message d'ouverture et/ou de statut, vers un programme serveur local, en fonction d'une réponse à une requête.

L'invention sera mieux comprise à la lecture de la description qui suit et à l'examen des figures qui l'accompagnent. Celles-ci sont présentées à titre indicatif nullement limitatif de l'invention. Les figures montrent :
- figure 1 : une illustration de moyens utiles à la mise en oeuvre du procédé selon l'invention.
- figure 2 : une illustration d'étapes du procédé selon l'invention.

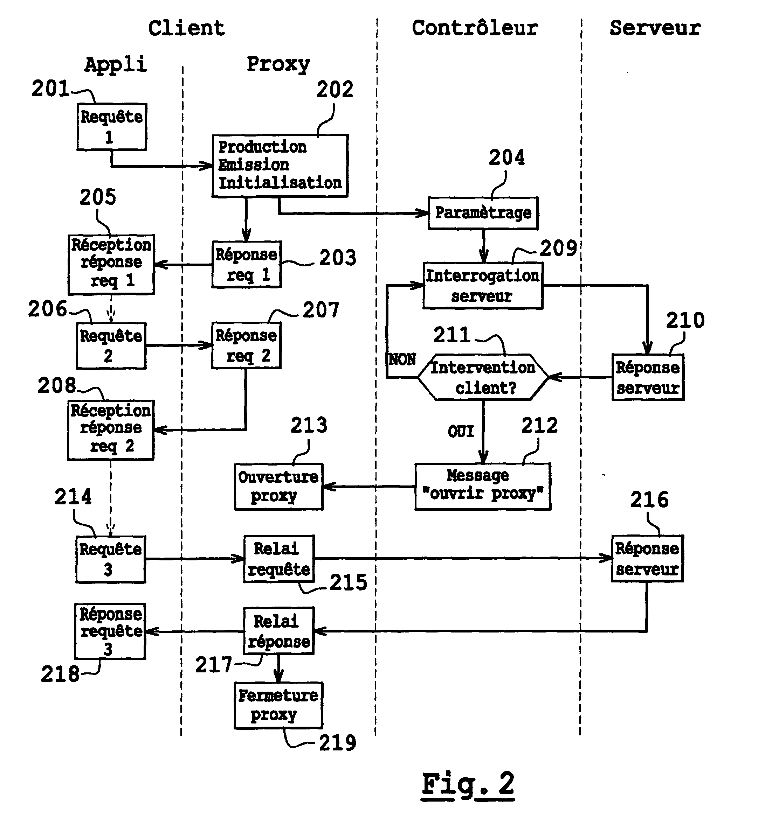

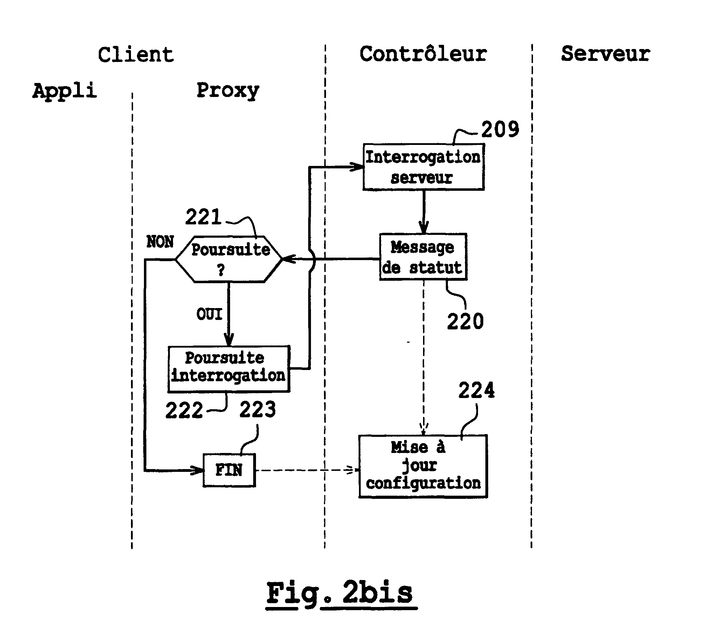

- figure 2bis : une illustration d'étapes du procédé selon l'invention.

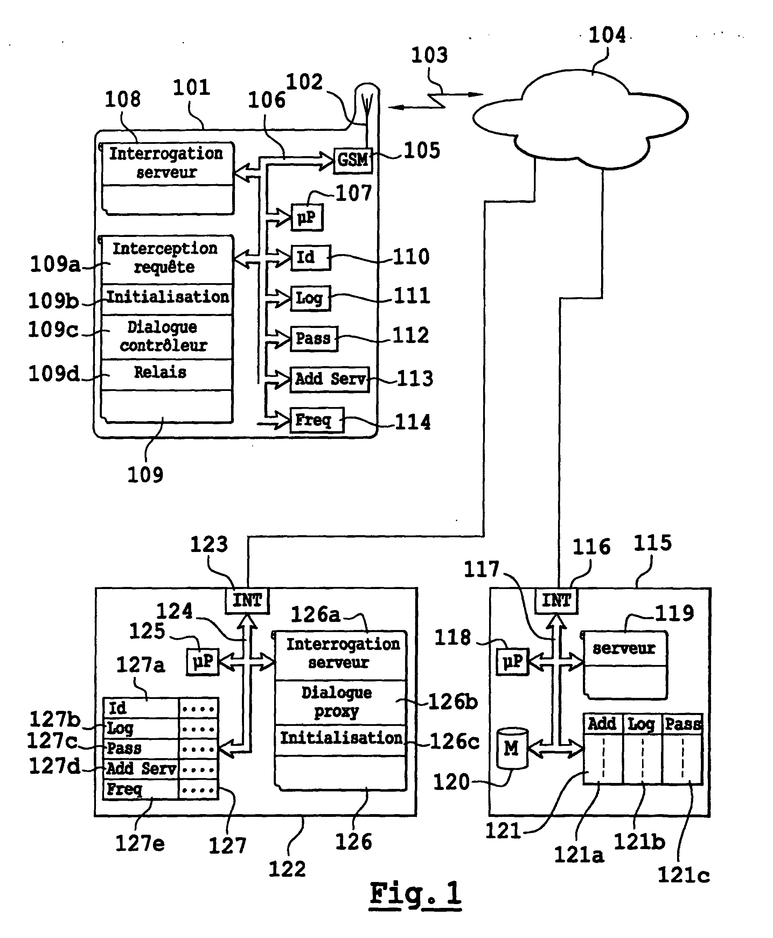

La figure 1 montre un appareil 101 client, ou client 101, mobile. Dans la description on considère que le client 101 mobile est un téléphone 101 mobile. Le téléphone 101 comporte alors une antenne 102 lui permettant d'effectuer une liaison 103 radioélectrique avec un réseau 104 cellulaire. Le détail du réseau 104 n'est pas montré. Pour la description on considère que le réseau 104 comporte tous les éléments nécessaires permettant, par exemple, au téléphone 101 de se connecter à l'Internet. Ainsi le réseau 104 comporte entre autres une station de base à laquelle est connecté le téléphone 101 ainsi que tous les dispositifs permettant de raccorder la station de base à l'Internet.

Le téléphone 101 comporte aussi des circuits électroniques 105 connectés d'une part à l'antenne 102, d'autre part à un bus 106 interne du téléphone 101. Le rôle des circuits 105 est donc d'assurer l'interface radio entre le téléphone 101 et le réseau 104. Dans la description, on a choisi la norme GSM, mais il pourrait s'agir d'une autre norme, comme le PCS, le DCS, l'UMTS ou toutes autres normes radioélectriques existantes et/ou à venir.

Dans la description on prête des actions à des appareils ou à des programmes, cela signifie que ces actions sont exécutées par un microprocesseur de cet appareil ou de l'appareil comportant le programme, ledit microprocesseur étant alors commandé par des codes instruction enregistrés dans une mémoire de l'appareil. Ces codes instruction permettent de mettre en oeuvre les moyens de l'appareil et donc de réaliser l'action entreprise.

Le téléphone 101 comporte un microprocesseur 107 connecté au bus 106. Le téléphone 101 comporte aussi des mémoires 108 et 109 de programme. Les mémoires 108 et 109 sont représentées de manière distinctes, mais en fait elles peuvent, ainsi que toutes les autres mémoires de l'appareil, être unifiées sur un seul et même composant.

La mémoire 108 comporte des codes instruction correspondant à une application cliente. Une telle application est, par exemple, un logiciel de messagerie électronique. Un tel logiciel permet au téléphone 101 d'interroger une messagerie électronique, c'est-à-dire un serveur de service, le service étant la messagerie électronique.

La mémoire 109 est divisée en plusieurs zones, chaque zone correspondant à une fonction ou à un mode de fonctionnement du programme serveur local ou «proxy». La mémoire 109 correspond donc en fait au code instruction du programme serveur local. Une zone 109a comporte des codes instruction pour intercepter une requête émise, par exemple, par l'application 108 cliente. La zone 109b comporte des codes instruction correspondant au fonctionnement en mode initialisation. Une zone 109c comporte des codes instruction correspondant au fonctionnement en mode de communication avec le serveur contrôleur réseau. Une zone 109d correspond au fonctionnement du programme serveur local en mode relais.

Les mémoires 108 et 109 sont connectées au bus 106.

Le téléphone 101 comporte aussi d'autres mémoires de configuration. Une mémoire 110 permet d'enregistrer un, ou plusieurs, identifiant/adresse du téléphone 101 pour ses communications avec un serveur contrôleur réseau ou un serveur de service. Un identifiant/adresse est, par exemple, une adresse Internet IPv4(protocole Internet version 4), une adresse Internet IPv6, un tel identifiant/adresse peut aussi être un numéro de téléphone permettant d'identifier le téléphone 101 sur le réseau cellulaire auquel est abonné son utilisateur. Ce dernier identifiant/adresse est utilisé dans le cadre d'une communication via les messages courts, par exemple.

Une mémoire 111 permet d'enregistrer un identifiant de l'utilisateur lors d'une connexion à un serveur de service. Un tel identifiant 111 est associé à un mot de passe 112 enregistré dans la mémoire 112. Une mémoire 113 permet d'enregistrer l'adresse d'un serveur de service. Une telle adresse est soit une adresse Internet selon un protocole IP ou une URL pour Universal Resource Locator ou Localisation Universelle de Ressources. Enfin une mémoire 114 permet d'enregistrer une fréquence d'interrogation d'un serveur de service.

Les mémoires 110 à 114 sont connectées au bus 106.

Dans la pratique les mémoires 110 à 114 permettent d'enregistrer les paramètres de l'application 108 cliente. L'application 108 a en effet besoin de l'adresse 113 pour émettre des requêtes vers un serveur de service ainsi que d'un identifiant 111 et d'un mot de passe 112 pour être reconnue sur ce serveur de service ainsi qu'une adresse 110 pour que le serveur de service puisse répondre à la requête de l'application 108.

La figure 1 montre aussi un serveur 115 de service. Le serveur 115 est connecté au réseau 104 via des circuits 116 interface de connexion. Les circuits 116 sont d'autre part connectés à un bus 117 interne du serveur 115 de service. Le serveur 115 de service comporte aussi un microprocesseur 118 ainsi qu'une mémoire 119 de programme. Le serveur 115 comporte aussi une mémoire 120 de stockage pour enregistrer des messages électroniques ainsi qu'une mémoire 121 d'identification pour identifier les personnes se connectant au serveur 115. Les éléments 118 à 121 sont connectés au bus 117.

La mémoire 119 comporte des codes instruction permettant au serveur 115 de gérer les requêtes qu'il reçoit de la part des différents clients, en particulier des applications clientes comme l'application 108.

La mémoire 121 est, par exemple, structurée en une table 121. Par exemple chaque ligne de la table 121 correspond à une personne, chaque colonne de la table 121 correspond à un renseignement sur cette personne. Ainsi la mémoire 121 comporte une colonne 121a correspondant à une adresse électronique, une colonne 121b correspondant à un identifiant ou «login» et une colonne 121c correspondant à un mot de passe.

La figure 1 montre aussi un serveur 122 contrôleur de réseau. Le serveur 122 est connecté au réseau 104 via des circuits 123 interfaces réseau, les circuits 123 sont connectés d'autre part à un bus 124 interne du serveur 122 contrôleur réseau.

Le serveur 122 contrôleur réseau comporte un microprocesseur 125, une mémoire 126 de programme et une mémoire 127 de configuration. Les éléments 125 à 127 sont connectés au bus 124.

La mémoire 126 comporte des codes instruction commandant le microprocesseur 125. Une zone 126a comporte les codes instruction permettant au serveur 122 d'interroger un serveur de service tel que le serveur 115. Une zone 126b comporte des codes instruction permettant au serveur 122 de dialoguer avec le programme 109 serveur local. Une zone 126c comporte des codes instruction correspondant à la gestion de messages d'initialisation émis par un programme serveur local.

La mémoire 127 d'initialisation est structurée en table 127. Par exemple, chaque colonne correspond à une personne, chaque ligne correspond à une information sur cette personne. La mémoire 127 comporte alors une ligne 127a correspondant à un identifiant d'une personne, par exemple un numéro de téléphone ou une adresse Internet. Une ligne 127b correspond à un identifiant tel que l'identifiant de la mémoire 111. Une ligne 127c correspond à un mot de passe, une ligne 127d correspond à l'adresse d'un serveur de service et une ligne 127e correspond à une fréquence d'interrogation d'un serveur de service.

L'ensemble des éléments de la figure 1 est mis en oeuvre par le procédé selon l'invention.

La figure 2 met en évidence le fait que les étapes du procédé selon l'invention sont mises en oeuvre sur plusieurs appareils. Les trois appareils qui interviennent sont d'une part un client 101 mobile, un serveur 122 contrôleur de réseau et un serveur 115 de service. Pour la description des étapes du procédé selon l'invention, on a choisi un serveur de messagerie électronique. Des actions sont donc mises en oeuvre par chacun de ces appareils.

La figure 2 montre aussi que sur le client 101, ou téléphone 101, mobile coexistent deux applications mettant chacune à leur tour en oeuvre des étapes du procédé selon l'invention. Sur le téléphone 101 mobile, on distingue donc une application cliente, par exemple une application servant à interroger un serveur de messagerie électronique et une application, ou programme, serveur local aussi connue sous le nom de «proxy». Les étapes du procédé selon l'invention sont donc aussi mises en oeuvre par ces deux programmes.

La figure 2 montre une première étape préliminaire 201 d'émission d'une première requête d'interrogation par l'application 108 cliente. Cette requête est constituée selon un protocole de messagerie électronique. De tels protocoles sont, par exemple, les protocoles POP et IMAP. De telles requêtes d'interrogation comportent un identifiant du serveur auquel elles sont adressées, l'identifiant de la personne émettant la requête, un mot de passe pour cette personne et un identifiant pour répondre à cette requête. Il s'agit en fait des paramètres de configuration de l'application 108. Dans notre exemple, l'adresse du serveur de service correspond à l'adresse du serveur 115, il s'agit d'une adresse Internet. L'identifiant de la personne correspond au contenu de la mémoire 111 et le mot de passe au contenu de la mémoire 112. L'adresse pour la réponse peut être, soit comprise dans le protocole de routage s'il s'agit du protocole IP, soit expressément placée dans la requête.

Une fois constituée, cette requête est émise. Ici, dans l'étape 201, par émise il faut comprendre soumise au microprocesseur avec pour instruction de l'émettre via les moyens radioélectriques 105 et 102.

Cependant le microprocesseur est aussi commandé par le programme 109 serveur local. Le microprocesseur sait donc qu'il doit intercepter toutes les requêtes et autres messages qui doivent être émis de manière radioélectrique. Ainsi on passe à une étape 202 de production et d'émission d'un message d'initialisation. Lors de cette étape 202, les codes instruction de la zone 109a commandent le microprocesseur 107. Cela permet au programme 109 serveur local d'intercepter la requête qui a été émise par l'application 108. Le programme 109 serveur local détermine alors qu'il s'agit de l'émission d'une première requête. Cette détection est relativement aisée, il suffit, par exemple, d'utiliser une mémoire drapeau permettant de mémoriser si une requête a déjà été émise ou non par l'application 108. Si la mémoire drapeau indique qu'aucune requête n'a été émise alors le programme 109 serveur local sait qu'il s'agit d'une phase d'initialisation, il réalise cette initialisation et valide la mémoire drapeau, dans le cas contraire, le programme 109 serveur local sait qu'il ne s'agit pas d'une phase d'initialisation.

Dans l'étape 202 le microprocesseur est aussi commandé par les codes instruction de la zone 109b. Dans l'étape 202 le microprocesseur 107 constitue un message d'initialisation qui comporte la requête 101. Ce message d'initialisation est alors émis à destination du serveur 122 contrôleur réseau. Dans l'étape 202, émission signifie que le message d'initialisation est diffusé radioélectriquement par les moyens radioélectriques du téléphone 101.

De l'étape 202 on passe d'une part à une étape 203 de réponse à la première requête et d'autre part également, à une étape 204 de paramétrage du serveur 122 contrôleur réseau.

L'étape 203 est réalisée par le programme 109 serveur local. Dans l'étape 203 le microprocesseur 107 compose donc une réponse à la requête émise dans l'étape 201 par l'application 108. Il s'agit d'une réponse standard définie par le protocole utilisé, que ce soit POP ou IMAP et indiquant, par exemple, que le serveur 115 de service n'est pas joignable ou est occupé. Cette réponse peut aussi indiquer qu'il n'y a pas de nouveau message. Le but de cette réponse est de leurrer l'application 108. Il faut en effet que l'application 108 pense avoir établi une communication avec le serveur 115 de service. Une fois composée la réponse à la requête 1 est émise, au même sens que l'émission pour l'étape 201. C'est-à-dire que cette réponse ne quittera en fait jamais le téléphone 101. De l'étape 203 on passe à une étape 205 de réception de réponse à la première requête. Dans l'étape 205 l'application 108 reçoit une réponse formatée selon le protocole qu'elle a utilisé pour émettre la requête dans l'étape 201. Cette réponse est alors conforme à ce qu'attend l'application 108. L'application 108 traite donc cette réponse comme si elle avait été émise par le serveur 115.

Dans l'étape 204, le serveur 122 contrôleur réseau reçoit un message d'initialisation. Ce message d'initialisation permet au microprocesseur 125 de mettre à jour la mémoire 127 de configuration. Dans l'étape 204 le microprocesseur 125 est commandé par les codes instruction des zones 126b et 126c. Dans l'étape 204 le microprocesseur 125 utilise les informations contenues dans le message d'initialisation pour mettre à jour la mémoire 127. Cette mise à jour consiste en la création d'une nouvelle colonne et dans le renseignement des champs/lignes de cette nouvelle colonne.

L'information de fréquence d'interrogation est, soit obtenue grâce à l'intervalle de temps séparant les deux premières requêtes émises par l'application 108, soit directement lue dans la mémoire 114 par le programme 109 serveur local. Cette fréquence d'interrogation est insérée dans le message d'initialisation de l'étape 202.

Les champs renseignés sont ceux qui ont déjà été décrits précédemment pour les étapes 201, 202 et lors de la description des moyens mis en oeuvre par le procédé selon l'invention.

Les étapes 201 à 205 constituent une phase d'initialisation du procédé selon l'invention. Pendant cette phase le programme serveur local 109 fonctionne en mode initialisation.

De l'étape 205, l'application 108 passe à une étape 206 d'émission d'une deuxième requête d'interrogation du serveur 115 de service. Cette deuxième requête est identique à la requête qui a été émise lors de l'étape 201. Cette requête est donc émise de la même manière que pour l'étape 201. Du point de vue de l'application 108, l'étape 206 est identique à l'étape 201. On passe alors a une étape 207 mise en oeuvre par le programme 109 serveur local.

Dans l'étape 207 le programme 109 intercepte la deuxième requête de la même manière qu'à l'étape 202. Il émet alors une réponse, à la deuxième requête, simulant ainsi le fait que le serveur 115 est occupé, injoignable ou , par exemple, qu'il n'y pas ne nouveau message. On passe alors à une étape 208, mise en oeuvre par l'application 108, de réception de la réponse à la deuxième requête. L'étape 208 est identique à l'étape 205.

Dans la pratique, l'intervalle de temps séparant l'étape 201 de l'étape 206 est régi par le contenu de la mémoire 114 correspondant à la fréquence d'interrogation, par l'application 108, du serveur 115 de service.

Les étapes 206 à 208 illustrent le fonctionnement du programme 109 serveur local en mode bloquant. Dans ce mode bloquant, le programme 109 intercepte donc tous les messages émis par l'application 108 et lui transmet une réponse lui signifiant qu'il n'y a aucun changement de contexte sur le serveur 115. Dans le mode bloquant aucune émission radioélectrique n'est effectuée due à une interrogation du serveur 115.

De l'étape 204, le serveur 122 contrôleur réseau passe à une étape 209 d'interrogation des serveurs de services.

Dans l'étape 209, le microprocesseur 125, commandé par les codes instruction de la zone 126a, parcourt la table 127 afin de déterminer quel serveur de service il doit interroger. Cette détermination se fait par rapport à une horloge interne, non représentée, du serveur 122 et par rapport aux informations de fréquence d'interrogation de la ligne 127e.

Lorsque le microprocesseur 125 trouve, dans la table 127, une interrogation à faire, le microprocesseur 125 utilise alors les informations de la colonne en question pour émettre une requête d'interrogation vers le serveur de service. Pour composer cette requête il utilise les informations comprises dans la colonne, en particulier l'identifiant 127b, le mot de passe 127c et l'adresse 127d du serveur de service. La requête d'interrogation du serveur 115 de service composé à l'étape 209 par le contrôleur 122 de réseau est identique à la requête d'interrogation composée aux étapes 201 et 206, si ce n'est que l'adresse de réponse, pour le serveur 115 de service, est celle du serveur 122 contrôleur réseau.

Pour l'interrogation d'un serveur de messagerie, le protocole utilisé est de préférence le protocole IMAP. Ce protocole permet en effet d'émettre des requêtes pour obtenir des renseignements sur le nombre de nouveaux messages dans une boîte à lettres électronique. Cela permet d'alléger les communications entre le serveur 122 et le serveur 115.

Les requêtes d'interrogation émises par le serveur 122 transitent via le réseau 104 jusqu'au serveur 115. On passe d'une étape 209 à l'étape 210 de réponse du serveur 115 de service.

Dans l'étape 210, le serveur 115 reçoit une requête d'interrogation pour connaître le statut d'une boîte à lettres électronique. Cette boîte à lettres électronique est identifiée par un «login» 127b/111 et un mot de passe 127c/112. Ces informations permettent au microprocesseur 118 de déterminer une ligne dans la table 121, et donc un compte de messagerie. Cette adresse permet au microprocesseur 118 de retrouver les messages correspondants dans la mémoire de stockage 120. Puis le serveur 115, compose une réponse à la requête d'interrogation émise à l'étape 209, cette réponse est envoyée à l'adresse du serveur ayant émis la requête, c'est-à-dire à l'adresse du serveur 122. De l'étape 210, on passe à une étape 211 d'analyse de la réponse du serveur 115 par le serveur 122.

Dans l'étape 211, le microprocesseur 125 détermine s'il y a des nouveaux messages dans la boîte à lettres qui a été interrogée. Cette détermination est effectuée en fonction du contenu de la réponse du serveur 115 à la requête émise à l'étape 209. Il s'agit d'une requête selon le protocole IMAP pour connaître le nombre de nouveaux messages dans une boite à lettres électronique. La réponse comporte donc un nombre de nouveau(x) message(s). Si ce nombre est 0, cela signifie qu'il n'y a pas de nouveau message. Si il n'y a pas de nouveau message, on repasse à l'étape 209 et les interrogations se poursuivent, si il y a au moins un nouveau message, on passe alors à une étape 212 d'ouverture du «proxy».

Dans l'étape 212, le microprocesseur 125 compose un message pour ouvrir le «proxy». Le destinataire de ce message est déterminé grâce au contenu de la mémoire 127. En effet, à partir d'un identifiant 127b et d'un mot de passe 127c, le microprocesseur 125 est capable de déterminer un identifiant 127a d'un téléphone 101. Cet identifiant est, soit une adresse Internet soit, par exemple, un numéro de téléphone permettant d'émettre un message court.

Le message d'ouverture du «proxy» est donc un simple message adressé au programme 109 serveur local comportant un code instruction indiquant qu'il faut changer le mode de fonctionnement du programme 109 serveur local. On passe alors à une étape 213 d'ouverture du «proxy».

Dans l'étape 213, le programme 109 serveur local reçoit le message émis à l'étape 212. Le programme 109 serveur local sait dans ce cas il ne doit plus bloquer les messages émis par l'application 108. Le programme 109 serveur local passe alors en mode relais.

De l'étape 208, l'application 108 passe à une étape 214 d'émission d'une troisième requête. Pour la description on considère que l'étape 214 est postérieure à l'étape 213. C'est-à-dire qu'au moment où survient l'étape 214, le programme 109 est dans un mode relais. L'étape 214 est identique aux étapes 201 et 206. De l'étape 214, on passe à une étape 215 de relais de la requête. L'étape 215 est mise en oeuvre par le programme 109 serveur local. Dans cette étape le programme 109 serveur local se comporte comme l'application 108 c'est-à-dire qu'il émet, cette fois-ci de manière radioélectrique, la requête d'interrogation. On passe alors à une étape 216 de réponse du serveur 115 de service.

Lorsqu'il se comporte en mode relais, le programme 109 du serveur local, ne déroute plus les requêtes émises par l'application 108 vers le serveur 122 contrôleur réseau. Il se comporte comme un simple intermédiaire dans l'acheminement des messages, sans plus intervenir ni sur leur contenu, ni sur leur destinataire. Dans l'étape 216 le serveur 115 reçoit une requête d'interrogation d'une boîte à lettres électronique classique et y répond donc de manière connue. Cette réponse est interceptée, dans l'étape 217, par le programme 109 serveur local. Encore une fois le programme 109 est en mode relais, donc il retransmet la réponse du serveur 115 directement à l'application 108, c'est l'étape 218 de traitement, par l'application 108, de la réponse du serveur 115 à la requête émise à l'étape 214. Il s'agit d'une étape classique et connue.

De l'étape 217, le programme 109 serveur local passe aussi à une étape 219 qui consiste à recommencer à fonctionner en mode bloquant comme cela a déjà été décrit pour les étapes 206 à 208.

La figure 2bis montre que l'étape 209 peut aussi être suivie d'une étape 220 d'émission d'un message de statut. L'étape 220 peut en fait être effectuée à n'importe quel moment par le serveur 122 contrôleur de réseau. Il s'agit de l'émission d'un message de statut à destination du programme 109 serveur local. L'étape 220 apparaît, idéalement, à intervalle régulier. Un message de statut est destiné à indiquer à un programme serveur local que le serveur 122 continue à interroger le serveur 115. De l'étape 220, on passe à une étape 221 de réception, par l'application 109 serveur local, du message de statut. Dans l'étape 221, le programme 109 détermine si il faut continuer ou pas à interroger le serveur 115. Si il faut continuer, on passe à une étape 222 de poursuite de l'interrogation. L'étape 222 consiste en fait en une réponse positive au message de statut. Le programme 109 serveur local émet alors une réponse de poursuite d'interrogation à destination du serveur 122 contrôleur réseau. Si il ne faut pas répondre, on passe alors à une étape 223 de fin d'interrogation.

A l'étape 223, aucune réponse n'est émise au message de statut. Dans ce cas, le contrôleur 122 réseau détecte qu'aucune réponse n'a été reçue en réponse à son message de statut et il met à jour sa configuration. C'est l'étape 224.

L'étape 224 consiste en fait à effacer une colonne de la mémoire 127. Cette colonne correspond à l'identifiant 127a pour lequel il n'a été reçu aucune réponse à un message de statut. Dans la pratique, on peut considérer qu'un message ouvrir «proxy» est un message de statut, mais il ne s'agit pas du seul message de statut possible.

Un message de statut peut aussi comporter une information selon laquelle aucun nouveau message n'a été reçu depuis le dernier message de statut.

Dans la pratique le changement de mode de fonctionnement du programme 109 serveur local peut aussi être provoqué à l'échéance d'un délai. Par exemple, si cela fait un certain temps que le programme 109 serveur local n'a pas reçu de message de statut de la part du serveur 122, le programme 109 serveur local peut alors considérer que le serveur 122 contrôleur réseau n'est plus actif. Dans ce cas, le programme 109 serveur local passe alors de lui-même en mode relais. En mode relais, le programme 109 serveur local ne répond plus aux messages de statut du serveur 122 contrôleur réseau.

Le passage d'un mode à l'autre, peut aussi être forcé par l'utilisateur du téléphone 101.

Avec la mise en oeuvre de l'invention, on voit que les connexions effectives entre les téléphones 101 et le serveur 115 de service n'ont lieu que lorsqu'elles sont vraiment utiles, c'est-à-dire lorsqu'il y a de nouveaux messages à consulter dans le cadre d'un serveur de messagerie.

On peut facilement étendre l'enseignement de l'invention à toutes les communications avec un client mobile devant interroger régulièrement un serveur pour détecter un changement de contexte sur ce serveur. Dans ce cas, les interrogations régulières sont faites par le serveur 122 contrôleur réseau et non pas par le téléphone101. Cela permet de ne pas surcharger la partie radiofréquence du réseau et de ne pas gaspiller inutilement l'énergie du téléphone 101 mobile.

Dans une variante de l'invention, lorsque le serveur 122 détecte un changement de contexte sur le serveur 115, le serveur 122 rapatrie alors ce nouveau contexte, par exemple les nouveaux messages sur le serveur 122. Le rapatriement des messages vers le téléphone 101 s'effectue alors non pas entre le téléphone 101 et le serveur 115, mais entre le téléphone 101 et le serveur 122.

On peut très bien envisager des protocoles de communication différents entre premièrement, l'application 108 et le serveur 115, deuxièmement, le programme 109 serveur local et le serveur 122 contrôleur réseau. En effet, le serveur 122 contrôleur réseau est amené à émettre des messages vers le téléphone 101 qui n'est pas en permanence, surtout dans la norme IPv4, connecté à Internet. Cela signifie que le téléphone 101 n'a pas en permanence une adresse Internet valide. Dans ce cas, on peut utiliser le protocole de messages court, par exemple, pour établir une communication entre le téléphone 101 et le serveur 122. Les autres communications du téléphone 101 étant toutes sortantes, elles peuvent se faire suite à une connexion à Internet du téléphone 101, initiée par ce téléphone 101.

## Revendications

1. Procédé d'optimisation d'un trafic (103) réseau comportant un client (101) mobile et un serveur (115) de service, le procédé comporte les étapes suivantes :
- une application (108) cliente, exécutée par le client mobile, émet (201) une première requête destinée au serveur de service,
- un programme (109) serveur local, exécuté par le client mobile, intercepte (202) la première requête destinée au serveur de service,
**caractérisé en ce que** le procédé comporte aussi les étapes suivantes:
- le programme serveur local, piloté par un serveur contrôleur réseau, produit (202) un message d'initialisation à partir du contenu de la première requête, message d'initialisation comportant des informations permettant à un serveur contrôleur de se faire passer pour l'application cliente, ces informations comprenant l'identifiant (111) et un mot (112) de passe, le message d'initialisation comportant aussi des informations (113) sur un serveur de service à interroger, telles que son adresse sur un réseau et son type,
- le programme serveur local émet (202) le message d'initialisation à destination du serveur (122) contrôleur,
- le serveur contrôleur réseau reçoit (204) le message d'initialisation et le serveur contrôleur se paramètre (204) en fonction du contenu du message d'initialisation pour émettre ( 209) des requêtes à destination du serveur de service.

2. Procédé selon la revendication 1, **caractérisé en ce que** le procédé comporte les étapes suivantes :
- l'application cliente émet (206) une deuxième requête destinée au serveur de service,
- le programme serveur local intercepte (207) la deuxième requête et interrompt son acheminement,
- le programme serveur local produit et émet (207) une réponse vers l'application cliente,
- l'application cliente reçoit (208) la réponse du programme serveur local.

3. Procédé selon l'une des revendications 1 ou 2, **caractérisé en ce que** le procédé comporte les étapes suivantes :
- le serveur contrôleur émet (209) une requête vers le serveur de service en se faisant passer pour l'application cliente,
- le serveur de service reçoit (210) la requête du serveur contrôleur et y répond (210),
- le serveur contrôleur reçoit la réponse et émet (212) un message d'ouverture à destination du programme serveur local,
- le programme serveur local reçoit (213) le message d'ouverture et se paramètre en conséquence,
- l'application cliente émet (214) une troisième requête à destination du serveur de service,
- le programme serveur local intercepte (215) la troisième requête et la relaie vers le serveur de service,
- le serveur de service reçoit et traite (216) la troisième requête.

4. Procédé selon la revendication 3, **caractérisé en ce que** le programme serveur local bloque (207) les requêtes de l'application cliente jusqu'à ce que le programme serveur local reçoive un message d'ouverture de la part du serveur contrôleur.

5. Procédé selon l'une des revendications 1 à 4, **caractérisée en ce que** le programme serveur local bloque les requêtes de l'application cliente jusqu'à l'échéance d'une durée prédéfinie.

6. Procédé selon l'une des revendications 1 à 5, **caractérisé en ce qu'**il comporte les étapes suivantes :
- le serveur contrôleur émet (220) un message de statut vers le programme serveur local,
- le serveur contrôleur interrompt (224) l'émission de requête vers le serveur de service s'il ne reçoit pas de réponse, correspondant au message de statut, de la part du programme serveur local.

7. Procédé selon l'une des revendications 1 à 6, **caractérisé en ce que** l'application cliente est une application cliente de messagerie électronique et le serveur de service est un serveur de messagerie.

8. Dispositif client, pour comuniquer sur un réseau, pour la mise en oeuvre d'étapes du procédé selon l'une des revendications 1 à 7, le dispositif client comporte une mémoire (108) de programme comportant des codes instruction correspondant à une application cliente émettant des requêtes vers un serveur de service, la mémoire (109) de programme comportant aussi des codes instruction correspondant à un programme serveur local pour intercepter et traiter des messages émis par l'application cliente **caractérisé en ce que** la mémoires de programme comporte aussi des codes instructions pour recevoir et traiter des messages émis par un serveur contrôleur réseau, le programme serveur local étant alors piloté par le serveur contrôleur réseau.

9. Dispositif serveur contrôleur, pour comuniquer sur un réseau, pour la mise en oeuvre d'étapes du procédé selon l'une des revendications 1 à 7, **caractérisé en ce que** le dispositif serveur contrôleur comporte une mémoire (127) de configuration pour enregistrer des informations d'un message d'initialisation, le dispositif serveur contrôleur comportant aussi une mémoire (126) de programme comportant des codes instruction pour émettre des requêtes vers le serveur de service en fonction du contenu de la mémoire de configuration, la mémoire de programme comportant aussi des codes instruction pour émettre un message d'ouverture et/ou de statut, vers un programme serveur local, en fonction d'une réponse à une requête, le programme serveur local étant alors piloté par le serveur contrôleur réseau.

## Patentansprüche

1. Verfahren zur Optimierung eines Netzwerkverkehrs (103), das einen mobilen Client (101) und einen Service-Server (115) beinhaltet, das die folgenden Stufen umfasst:
- eine Client-Anwendung (108), die von dem mobilen Client ausgeführt wird, sendet (201) eine erste Anfrage, die für den Service-Server bestimmt ist,
- ein Proxy Programm (109), das von dem mobilen Client ausgeführt wird, fängt die erste Anfrage, die für den Service-Server bestimmt ist, ab (202),
**dadurch gekennzeichnet, dass** das Verfahren außerdem die folgenden Stufen umfasst:
- das Proxy Programm, gesteuert von einem Netzwerk-Server, erzeugt (202) eine Initialisierungsnachricht auf Grundlage des Inhalts der ersten Anfrage, wobei die Initialisierungsnachricht Informationen enthält, die einem Netzwerk-Server gestatten, sich als die Client-Anwendung auszugeben, wobei diese Informationen die Kennung (111) und ein Passwort (112) beinhalten, wobei die Initialisierungsnachricht außerdem Informationen (113) über einen zu befragenden Service-Server enthält, wie dessen Netzwerkadresse und dessen Typ,
- das Proxy Programm sendet (202) die Initialisierungsnachricht an den Netzwerk-Server (122),
- der Netzwerk-Server empfängt (204) die Initialisierungsnachricht und parametrisiert sich (204) dem Inhalt der Initialisierungsnachricht entsprechend, um Anfragen an den Service-Server zu senden (209).

2. Verfahren nach Anspruch 1, **dadurch gekennzeichnet, dass** das Verfahren die folgenden Stufen umfasst:
- die Client-Anwendung sendet (206) eine zweite Anfrage, die für den Service-Server bestimmt ist,
- das Proxy Programm fängt die zweite Anfrage ab (207) und unterbricht deren Übertragung,
- das Proxy Programm erzeugt eine Antwort und sendet (207) diese zur Client-Anwendung,
- die Client-Anwendung empfängt (208) die Antwort des Proxy Programms.

3. Verfahren nach einem der Ansprüche 1 oder 2, **dadurch gekennzeichnet, dass** das Verfahren die folgenden Stufen umfasst:
- der Netzwerk-Server sendet (209) eine Anfrage zum Service-Server und gibt sich dabei für die Client-Anwendung aus,
- der Service-Server empfängt (210) die Anfrage des Netzwerk-Servers und antwortet (210) darauf,
- der Netzwerk-Server empfängt die Antwort und sendet (212) eine Freigabe-Nachricht an das Proxy Programm,
- das Proxy Programm empfängt (213) die Freigabe-Nachricht und parametrisiert sich entsprechend,
- die Client-Anwendung sendet (214) eine dritte Anfrage an den Service-Server,
- das Proxy Programm fängt die dritte Anfrage ab (215) und leitet sie weiter an den Service-Server,
- der Service-Server empfängt und verarbeitet (216) die dritte Anfrage.

4. Verfahren nach Anspruch 3, **dadurch gekennzeichnet, dass** das Proxy Programm die Anfragen der Client-Anwendung sperrt (207), bis das Proxy Programm eine Freigabe-Nachricht vom Netzwerk-Server erhält.

5. Verfahren nach einem der Ansprüche 1 bis 4, **dadurch gekennzeichnet, dass** das Proxy Programm die Anfragen der Client-Anwendung bis zum Ablauf einer vorher festgesetzten Zeit sperrt.

6. Verfahren nach einem der Ansprüche 1 bis 5, **dadurch gekennzeichnet, dass** es die folgenden Stufen umfasst:
- der Netzwerk-Server sendet (220) eine Status-Nachricht an das Proxy Programm,
- der Netzwerk-Server unterbricht (224) das Senden der Anfrage an den Service-Server, wenn er keine Antwort, die der Statusnachricht entspricht, vom Proxy Programm erhält.

7. Verfahren nach einem der Ansprüche 1 bis 6, **dadurch gekennzeichnet, dass** die Client-Anwendung eine Client-Anwendung für Electronic Messaging und der Service-Server ein Messaging-Server ist.

8. Client Vorrichtung zur Kommunikation über ein Netzwerk zur Durchführung von Stufen des Verfahrens nach einem der Ansprüche 1 bis 7, wobei die Client Vorrichtung einen Programm-Speicher (108) beinhaltet, der Instruktionscodes enthält, die einer Client-Anwendung entsprechen, welche Anfragen an einen Service-Server sendet, wobei der Programm-Speicher (109) außerdem einem Proxy Programm entsprechende Instruktionscodes enthält, um Nachrichten abzufangen und zu verarbeiten, die von der Client-Anwendung gesendet werden, **dadurch gekennzeichnet, dass** der Programm-Speicher außerdem Instruktionscodes enthält, um Nachrichten zu empfangen und zu verarbeiten, die von einem Netzwerk-Server gesendet werden, wobei das Proxy Programm dann vom Netzwerk-Server gesteuert wird.

9. Netzwerk-Server-Vorrichtung, zur Kommunikation über ein Netzwerk, zur Ausführung von Stufen des Verfahrens nach einem der Ansprüche 1 bis 7, **dadurch gekennzeichnet, dass** die Netzwerk-Server-Vorrichtung einen Konfigurations-Speicher (127) beinhaltet, um Informationen einer Initialisierungsnachricht zu speichern, wobei die Netzwerk-Server-Vorrichtung außerdem einen Programm-Speicher (126) beinhaltet, der Instruktionscodes enthält, um in Abhängigkeit vom Inhalt des Konfigurations-Speichers Anfragen an den Service-Server zu senden, wobei der Programm-Speicher außerdem Instruktionscodes enthält, um eine Freigabe-Nachricht und/oder eine Status-Nachricht, an ein Proxy Programm, in Abhängigkeit einer Antwort auf eine Anfrage zu senden, wobei das Proxy Programm dann vom Netzwerk-Server gesteuert wird.

## Claims

1. Method for optimising network traffic (103) comprising a mobile customer (101) and a service server (115), the method comprising the following steps:
- a customer application (108), executed by the mobile customer, transmits (201) a first request addressed to the service server,
- a local server programme (109), executed by the mobile customer, intercepts (202) the first request addressed to the service server,
***characterised in that*** the method also comprises the following steps:
- the local server programme, controlled by a network controller server, produces (202) an initialisation message from the contents of the first request, said initialisation message comprising information allowing a controller server to switch itself for the customer application, this information comprising the identifier (111) and a password (112), the initialisation message also comprising information (113) on a service server to be interrogated, such as its address on a network and its type,
- the local server programme transmits (202) the initialisation message addressed to the controller server (122),
- the network controller server receives (204) the initialisation message and the controller server parameterises itself (204) as a function of the contents of the initialisation message in order to transmit (209) requests addressed to the service server.

2. Method according to claim 1, ***characterised in that*** the method comprises the following steps:
- the customer application transmits (206) a second request addressed to the service server,
- the local server programme intercepts (207) the second request and interrupts its passage,
- the local server programme produces and transmits (207) a reply to the customer application,
- the customer application receives (208) the reply from the local server programme.

3. Method according to one of claims 1 or 2, ***characterised in that*** the method comprises the following steps:
- the controller server transmits (209) a request to the service server while switching itself for the customer application,
- the service server receives (210) the request from the controller server and replies to it (210),
- the controller server receives the reply and transmits (212) an opening message addressed to the local server programme,
- the local server programme receives (213) the opening message and parameterises itself accordingly,
- the customer application transmits (214) a third request addressed to the service server,
- the local server programme intercepts (215) the third request and relays it to the service server,
- the service server receives and processes (216) the third request.

4. Method according to claim 3, ***characterised in that*** the local server programme blocks (207) the requests from the customer application until the local server programme receives an opening message on the part of the controller server.

5. Method according to one of claims 1 to 4, ***characterised in that*** the local server programme blocks the requests from the customer application until a predetermined period of time has elapsed.

6. Method according to one of claims 1 to 5, ***characterised in that*** it comprises the following steps:
- the controller server transmits (220) a status message to the local server programme,
- the controller server interrupts (224) the transmission of the request to the service server if it receives no reply, corresponding to the status message, on the part of the local server programme.

7. Method according to one of claims 1 to 6, ***characterised in that*** the customer application is an electronic messaging customer application and the service server is a messaging server.

8. Customer device for communicating on a network for implementation of steps of the method according to one of claims 1 to 7, the customer device comprising a programme memory (108) comprising instruction codes corresponding to a customer application transmitting requests to a service server, the programme memory (109) also comprising instruction codes corresponding to a local server programme to intercept and process messages transmitted by the customer application, ***characterised in that*** the programme memory also comprises instruction codes to receive and process messages transmitted by a network controller server, the local server programme then being controlled by the network controller server.

9. Controller server device for communicating on a network for implementation of steps of the method according to one of claims 1 to 7, ***characterised in that*** the controller server device comprises a configuration memory (127) for recording information of an initialisation message, the controller server device also comprising a programme memory (126) comprising instruction codes for transmitting requests to the service server as a function of the contents of the configuration memory, the programme memory also comprising instruction codes for transmitting an opening and/or status message to a local server programme as a function of a reply to a request, the local server programme then being controlled by the network controller server.
